(19) Europäisches Patentamt
European Patent Office
Office européen des brevets

(11) Veröffentlichungsnummer: **0 389 962 B1**

(12) **EUROPÄISCHE PATENTSCHRIFT**

(45) Veröffentlichungstag der Patentschrift: **02.11.95**

(51) Int. Cl.[6]: **C04B 35/58**

(21) Anmeldenummer: **90105407.2**

(22) Anmeldetag: **22.03.90**

# (54) Sinterfähiges Keramikpulver, Verfahren zu seiner Herstellung, daraus hergestellte Siliziumnitridkeramik, Verfahren zu deren Herstellung sowie deren Verwendung.

(30) Priorität: **25.03.89 DE 3909978**

(43) Veröffentlichungstag der Anmeldung:
**03.10.90 Patentblatt 90/40**

(45) Bekanntmachung des Hinweises auf die Patenterteilung:
**02.11.95 Patentblatt 95/44**

(84) Benannte Vertragsstaaten:
**CH DE FR GB IT LI**

(56) Entgegenhaltungen:
**EP-A- 372 382**
**EP-A- 0 266 918**
**EP-A- 0 305 759**
**FR-A- 2 190 764**

**CHEMICAL ABSTRACTS, Band 108, Nr. 20, 16. Mai 1989, Seite 314, Zusammenfassung Nr. 172382r, Columbus, Ohio, US; & JP-A-63 21 253.**

**ADVANCED CERAMIC MATERIALS, Band 3, Juli 1988, Seiten 320-323, Westerville, OH, US; K.B. SCHWARTZ et al.: "Microstructural development in Si3N4/polysilazane bodies during heating"**

(73) Patentinhaber: **HOECHST AKTIENGESELLSCHAFT**

**D-65926 Frankfurt am Main (DE)**

(72) Erfinder: **Peuckert, Marcellus, Dr.**
**Platanenweg 8**
**D-6238 Hofheim am Taunus (DE)**
Erfinder: **Vaahs, Tilo, Dr.**
**Am Flachsland 54**
**D-6233 Kelkheim (Taunus) (DE)**
Erfinder: **Brück, Martin**
**Haneckstrasse 17**
**D-6238 Hofheim am Taunus (DE)**
Erfinder: **Kleiner, Hans-Jerg, Dr.**
**Altkönigstrasse 11a**
**D-6242 Kronberg (Taunus) (DE)**
Erfinder: **Riedel, Ralf, Dr.**
**Kasparswaldstrasse 21**
**D-7022 Leinfelden-Echterdingen (DE)**
Erfinder: **Seher, Martin**
**Neuhauserstrasse 69**
**D-7000 Stuttgart (DE)**
Erfinder: **Petzow, Günter, Prof. Dr.**
**Tannenweg 7**
**D-7022 Leinfelden-Echterdingen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 389 962 B1

Rank Xerox (UK) Business Services
(3.10/3.09/3.3.3)

CHEMICAL ABSTRACTS, Band 110, Nr. 8, 17. April 1989, Seite 324, Zusammenfassung Nr. 140358n, Columbus, Ohio, US; & JP-A-63 242 962.

**Beschreibung**

Die Erfindung betrifft die Herstellung eines neuen sinterfähigen Keramikpulvers und seine Weiterverarbeitung zu Siliziumnitridkeramik.

Reines $Si_3N_4$-Pulver kann im allgemeinen drucklos bei 1850 °C oder unter Anwendung von Druck bei höheren Temperaturen jeweils durch Zusatz oxidischer Sinterhilfsmittel wie beispielsweise Aluminiumoxid, Siliciumoxid, Magnesiumoxid oder Yttriumoxid bis zur theoretischen Dichte verdichtet werden.

Im Gegensatz dazu erweist sich die vollständige Verdichtung von $Si_3N_4$/SiC-Mischpulver als wesentlich schwieriger und gelingt meist nur durch Heißpressen.

Eine gute Reproduzierbarkeit der mechanischen und physikalischen Eigenschaften von Dispersionswerkstoffen hängt wesentlich von der homogenen Verteilung der einzelnen Phasen im Gefüge ab. Die gleichmäßige Verteilung sowohl der Dispersionsphase als auch der Sinterhilfsmittel bereitet bei der konventionellen Herstellung von Mischkeramiken aus pulverförmigem $Si_3N_4$, SiC und Sinterhilfsmitteln im allgemeinen große Schwierigkeiten und bedarf aufwendiger Misch- und Mahlprozesse der entsprechenden Pulvermischungen. Deshalb werden Verfahren gesucht, die eine Verbesserung der Verteilung der unterschiedlichen Teilchen in den Ausgangspulvern gewährleisten.

Eine Möglichkeit zur homogeneren Verteilung zweier oder mehrerer Phasen bietet die Abscheidung der Sinterhilfsmittel auf ein Keramikpulver, wie etwa SiC-Pulver, aus einer Lösungsphase. Hierzu wird z.B. SiC-Pulver zunächst in einem Suspensionsmittel dispergiert, in welchem Sinterhilfsmittel in Form von Salzen, metallorganischen Verbindungen oder anorganischen Polymeren gelöst vorliegen. Die gelösten Sinterhilfsmittel werden dann beispielsweise durch Entzug des Lösungsmittel auf die SiC-Teilchen niedergeschlagen (DE-C-28 56 593). Durch thermische Zersetzung werden die Sinterhilfsmittel anschließend in die entsprechenden keramischen Phasen umgewandelt.

Aus EP-A-266978 ist die Herstellung eines keramischen Materials durch Pyrolyse eines Polysilazans bekannt. Eine Sinterung wird jedoch nicht beschrieben.

Eine Aufgabe der vorliegenden Erfindung besteht darin, ein Verfahren bereitzustellen, das die Synthese eines sinterfähigen $Si_3N_4$- oder $Si_3N_4$/SiC-Pulvers, in dem sowohl die $Si_3N_4$- und SiC-Teilchen als auch die Sinterhilfsmittel extrem gut verteilt sind, gewährleistet.

Die erfindungsgemäße Lösung dieser Aufgabe besteht darin, daß als $Si_3N_4$- bzw. SiC-Quelle eine Si, C, H und N enthaltende polymere Verbindung, ein organisch substituiertes Polysilazan, verwendet und auf einem pulverförmigen Sinterhilfsmittel niedergeschlagen wird. Anschließend erfolgt eine Pyrolyse. Ein solches Verfahren wird bereits beschrieben in der nicht vorveröffentlichten deutschen Patentanmeldung DE-A-38 40 773; dort wird ein Polysilazan der Formel $(CH_3SiHNH)_n(CH_3SiN)_n$ mit n = 10-12 eingesetzt.

Ein Gegenstand der vorliegenden Erfindung ist demgemäß ein Verfahren zur Herstellung eines sinterfähigen Keramikpulvers, dadurch gekennzeichnet, daß man ein Polysilazan schmilzt oder in einem organischen Lösungsmittel löst, in dieser Schmelze oder Lösung ein pulverförmiges Sinterhilfsmittel suspendiert, dann die erstarrte Schmelze oder den nach Verdampfung des Lösungsmittels erhaltenen Rückstand in Schutzgasatmosphäre bei 500 bis 1600 °C pyrolysiert und dann in einem aprotischen Lösungsmittel mahlt, wobei das Polysilazan entweder

A) dadurch erhältlich ist, daß man mindestens eines der Oligosilazane der Formel (I)

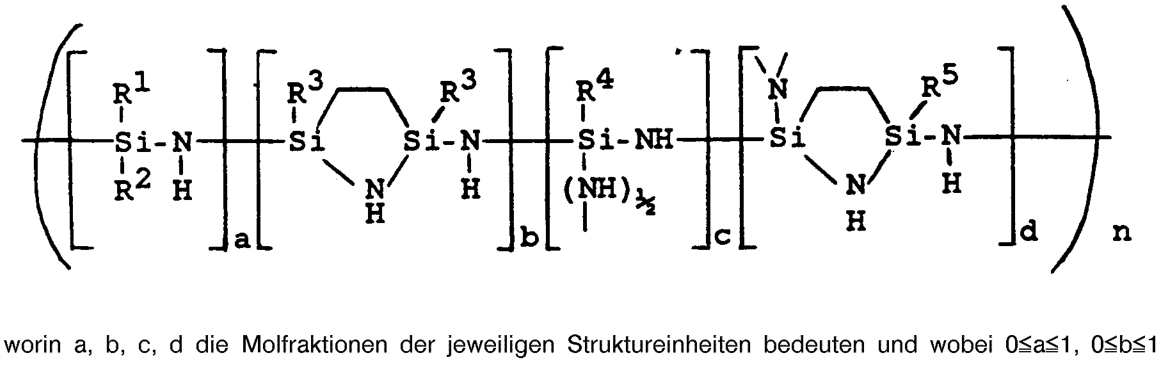

worin a, b, c, d die Molfraktionen der jeweiligen Struktureinheiten bedeuten und wobei $0 \leq a \leq 1$, $0 \leq b \leq 1$, $0 \leq c < 0.7$, $0 \leq d < 0.7$, $0.3 \leq a+b$, $c+d < 0.7$ und n etwa 2 bis etwa 12 ist, mit mindestens einem der Chlorsilane $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ bei 30 bis 300 °C umsetzt, wobei unabhängig voneinander $R^1$, $R^2$, $R^4$, $R^6$, $R^7$, $R^8$ = H, $C_1$-$C_6$-Alkyl oder $C_2$-$C_6$-Alkenyl und $R^3$, $R^5$, $R^9$, $R^{10}$ = $C_1$-$C_6$-Alkyl oder $C_2$-$C_6$-Alkenyl ist, oder

B) folgende Formel hat

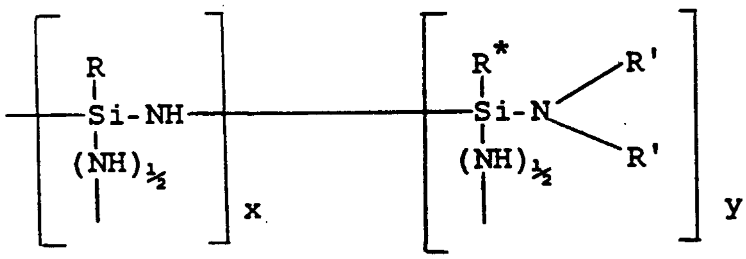

worin R und R* gleich oder verschieden sein können und R, R* = $C_1$-$C_4$-Alkyl, Vinyl oder Phenyl und R′ = $C_1$-$C_4$-Alkyl ist und x, y die Molfraktionen der beiden Struktureinheiten bedeuten, wobei x + y = 1 und x = 0,7-0,95 ist.

Die unter A) genannten Polysilazane enthalten Chlor und sollen daher im folgenden auch als "Polychlorsilazane" bezeichnet werden.

Natürlich kann man auch Mischungen der gemäß A) erhaltenen Polysilazane für die Infiltration verwenden, oder Mischungen der Polysilazane gemäß B), oder Mischungen der Polysilazane gemäß A) mit Polysilazanen gemäß B).

Vorzugsweise ist unabhängig voneinander $R^1$, $R^2$, $R^4$, $R^6$, $R^7$, $R^8$ = H, $C_1$-$C_3$-Alkyl oder $C_2$-$C_3$-Alkenyl und $R^3$, $R^5$, $R^9$, $R^{10}$ = $C_1$-$C_3$-Alkyl oder $C_2$-$C_3$-Alkenyl. Besonders bevorzugt ist der Fall, daß $R^1$ = $R^6$ = H, $R^2$ = $R^3$ = $R^5$ = $R^7$ = $R^8$ = $R^9$ = $R^{10}$ = $CH_3$ und unabhängig voneinander $R^4$, $R^8$ = $CH_3$ oder Vinyl ist.

a, b, c, d sind die Molfraktionen der jeweiligen Struktureinheiten, wobei a + b + c + d = 1 gilt. Besonders geeignete Polychlorsilazane werden erhalten, wenn man von Oligosilazanen der Formel (I) ausgeht, für die a = 1 oder b = 1 ist, oder von Gemischen dieser beiden Oligosilazane, oder von Oligosilazanen der Formel (I), für die $0<a<1$ und $0<b<1$ mit $a+b= 1$ gilt oder für die $0<a<1$ und $0<d<0.7$ mit $a+d= 1$ gilt. Von diesen Polychlorsilazanen setzt man vor allem solche beim erfindungsgemäßen Verfahren ein, die nicht ausschließlich aus Oligosilazanen der Formel (I) mit a = 1, und Chlorsilanen der Formel $R^6R^7SiCl_2$ (gemäß der deutschen Patentanmeldung DE-A-37 33 728) hergestellt worden sind.

Anders ausgedrückt: Wenn ausschließlich ein Oligosilazan der Formel (I) mit a = 1 eingesetzt wird, so setzt man es vorzugsweise mit mindestens einem der Chlorsilane $R^8SiCl_3$, $Cl_2R^9Si$-$CH_2CH_2$-$SiR^9Cl_2$, $Cl_3Si$-$CH_2CH_2$-$SiR^{10}Cl_2$ um. Wird dagegen ein Oligosilazan der Formel (I) mit a = 1 im Gemisch mit anderen der genannten Oligosilazane eingesetzt, so kommt für die Umsetzung zum Polychlorsilazan das Chlorsilan $R^6R^7SiCl_2$ genauso gut in Frage wie die drei genannten Chlorsilane.

Ganz besonders bevorzugt setzt man Polychlorsilazane gemäß A) ein, die aus einem Oligosilazan (I) mit a = 0.9 - 0.97, b = 0.1 - 0.03 (c=d=0) und mindestens einem der vier genannten Chlorsilane (insbesondere $CH_3SiCl_3$) oder aus einem Oligosilazan (I) mit a = 0.9 - 0.97, d = 0.1 - 0.03 (b=c=0) und mindestens einem der vier genannten Chlorsilane (insbesondere $CH_3SiCl_3$) erhalten worden sind. Falls $CH_3SiCl_3$ als Chlorsilan eingesetzt wird, ist das molare Verhältnis Oligosilazan:$CH_3SiCl_3$ vorzugsweise 1:0.1 bis 1:1.5.

Die Polychlorsilazane und ihre Herstellung werden bereits beschrieben in den deutschen Patentanmeldungen DE-A-37 33 728, 38 40 770, 38 40 774, 38 40 775, 38 40 777, 38 40 779.

Die als Ausgangsprodukte für die Polychlorsilazane eingesetzten Oligosilazane der Formel (I) können dadurch erhalten werden, daß man überschüssigen Ammoniak mit einem Ausgangsmaterial, das mindestens eine der beiden Komponenten (II) $R^1R^2SiCl_2$ und (III) $Cl_2R^3Si$-$CH_2CH_2$-$SiR^3Cl_2$ enthält, sowie außerdem eine oder beide der Komponenten (IV) $R^4SiCl_3$ und (V) $Cl_3Si$-$CH_2CH_2$-$SiR^5Cl_2$ enthalten kann, bei -70 °C bis +100 °C umsetzt, wobei unabhängig voneinander $R^1$, $R^2$, $R^4$ = H, $C_1$-$C_6$-Alkyl oder $C_2$-$C_6$-Alkenyl und $R^3$, $R^5$ = $C_1$-$C_6$-Alkyl oder $C_2$-$C_6$-Alkenyl ist und der molare prozentuale Anteil an (II) oder (III) oder deren Gemisch im Ausgangsmaterial mindestens 30 % beträgt.

Die als Ausgangsmaterialien für die Oligosilazane eingesetzten Chlorsilane (II) $R^1R^2SiCl_2$ und (IV) $R^4SiCl_3$ sind im Handel erhältlich, die ethylenverbrückten Spezies (III) und (V) sind durch Hydrosilylierung von handelsüblichem $R^3HSiCl_2$ und Ethin zugänglich, bzw. durch Hydrosilylierung von Vinyltrichlorsilan und $R^5HSiCl_2$ (siehe Versuchsbericht).

Zur Herstellung der Oligosilazane werden vorzugsweise die Chlorsilane in einem Lösungsmittel vorgelegt, welches sich inert gegenüber den Reaktanten - Chlorsilane und $NH_3$ -verhält, und mit Ammoniak bis zur Sättigung vermischt, was dann eintritt, wenn sämtliche SiCl-Funktionen durch NH-Gruppen substituiert

sind.

Für diese Reaktion geeignete Lösungsmittel sind z.B. gesättigte aliphatische oder aromatische Kohlenwasserstoffe wie n-Pentan, Cyclohexan, Toluol, chlorierte Kohlenwasserstoffe wie Chloroform oder Chlorbenzol, oder Ether wie Diethylether oder THF.

Gegebenenfalls kann bei der Herstellung der Oligosilazane auch unter vermindertem Druck gearbeitet werden, aber auch bei Drücken von 1 bis 100 bar. Ammoniak kann als Gas oder als Flüssigkeit zudosiert werden. Das Verfahren kann auch kontinuierlich gestaltet werden.

Bei der Umsetzung der Oligosilazane zum Polychlorsilazan beträgt vorzugweise das molare Verhältnis der Reaktanten Chlorsilan:Monomereneinheit des Oligosilazane (n = 1) etwa 0,1:1 bis etwa 1,5:1, insbesondere etwa 0,1:1 bis etwa 0,7:1.

Zur Umsetzung der Reaktanten miteinander werden vorzugsweise das oder die Oligosilazane vorgelegt und mindestens eins der genannten Chlorsilane zugegeben. Da die Reaktion exotherm ist, wird beim Zusammengeben der Reaktanten vorzugsweise zunächst die Temperatur bei 30 bis 50 °C gehalten. Anschließend erhitzt man auf Temperaturen von 100 bis 300 °C, vorzugsweise auf 120 bis 250 °C

Nach beendeter Umsetzung wird der Rest an leichter flüchtigen Verbindungen im allgemeinen durch Anlegen von Vakuum aus dem Reaktionsgefäß entfernt.

Das bei der Reaktion ebenfalls entstehende $NH_4Cl$ sublimiert im Verlauf der Reaktion zum größten Teil aus dem Reaktionsgemisch ab. Der eventuell verbliebene Rest des $NH_4Cl$ kann durch Extraktion mit einem inerten organischen Lösungsmittel, wie n-Hexan, Toluol, Ether von dem hergestellten Polychlorsilazan abgetrennt werden.

Die Reaktionsdauer richtet sich nach der Geschwindigkeit des Aufheizens und der Reaktionstemperatur. Im allgemeinen genügt eine Reaktionszeit von 3 bis 7 Stunden.

Es ist auch möglich, die Reaktion in einem organischen Lösungsmittel durchzuführen: Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoffe wie Chlorbenzol, oder Ether wie Dibenzylether, Diethylenglykoldiethylether. Bei Verwendung eines Lösungsmittels, in dem das gebildete $NH_4Cl$ unlöslich ist, kann letzteres durch Filtration abgetrennt werden. Die Polychlorsilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1 bis 10 Atmosphären kann gearbeitet werden.

Die erhaltenen Polychlorsilazane schmelzen bereits bei etwa 50 bis 200 °C. Sie verbinden eine hohe keramische Ausbeute (bei der folgenden thermischen Zersetzung) mit niedriger Schmelztemperatur; durch Mischung verschiedener Polychlorsilazane kann man diesen Effekt optimieren.

Die unter B) genannten Polysilazane und ihre Herstellung werden bereits beschrieben in der deutschen Patentanmeldung DE-A-37 37 921.

Sie werden hergestellt, indem man ein oder mehrere Dialkylaminoorganyldichlorsilane der Formel $RSiCl_2$-NR′R′, worin R = $C_1$-$C_4$-Alkyl, Vinyl oder Phenyl und R′ = $C_1$-$C_4$-Alkyl ist, mit mindestens 3,35 Mol Ammoniak pro Mol Silan in einem Lösungsmittel bei Temperaturen von -80 °C bis +70 °C umsetzt. Vorzugsweise ist R = Methyl, Ethyl, Vinyl oder Phenyl und R′ = Methyl. Insbesondere ist R = Ethyl und R′ = Methyl.

Die als Ausgangsprodukte für diese Polysilazane eingesetzten Dialkylaminoorganyldichlorsilane $RSiCl_2$-NR′R′ (im folgenden auch als "Aminochlorsilane" bezeichnet) können nach S.S. Washburne, W.R. Peterson, J. Organometal. Chem. 21 (1970), Seite 59 wie folgt erhalten werden:

Ein oder mehrere Organyltrichlorsilane $RSiCl_3$, wobei R für Alkylgruppen mit 1 bis 4 C-Atomen, für Vinyl oder Phenyl steht, werden mit Dialkylamin HNR′R′ umgesetzt, wobei R′ für Alkylgruppen mit 1 bis 4 C-Atomen steht. Die Umsetzung wird in aprotischen Lösungsmitteln, vorzugsweise polaren wie Ethern, insbesondere in THF durchgeführt.

Das Molverhältnis von Organyltrichlorsilan zu Dialkylamin kann Werte zwischen 1:1 und 1:3 annehmen, bevorzugt wird ein Verhältnis von etwa 1:2.

Die bei der Reaktion entstehenden Ammoniumsalze fallen aus der Reaktionslösung aus, während die gebildeten Aminochlorsilane in Lösung bleiben.

Die erhaltenen Aminochlorsilane der Formel $RSiCl_2$-NR′R′ werden pro Mol mit mindestens 3,35 Mol, vorzugsweise mit mindestens 3,5 Mol Ammoniak in aprotischen Lösungsmitteln, vorzugsweise polaren wie Ethern, insbesondere THF umgesetzt. Dies geschieht bei Temperaturen zwischen -80 °C und +70 °C, bevorzugt bei -10 °C bis 0 °C.

Die entstehenden Polysilazane lösen sich in allen gängigen aprotischen Lösungsmitteln vollständig. Sie besitzen die folgenden Struktureinheiten:

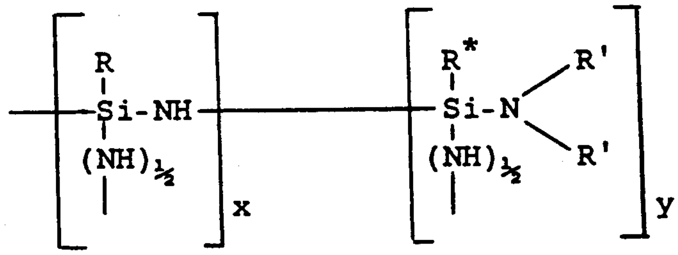

mit x + y = 1,

wobei für R* zwar dieselben Reste in Frage kommen wie für R, aber R und R* gleich oder verschieden sein können (verschieden, wenn mehr als ein Aminochlorsilan mit $NH_3$ umgesetzt wird).

Dabei erhält man Werte von x = 0,7-0,95 (y = 0,3-0,05), wenn man mindestens 3,35 Mol $NH_3$ pro Mol Aminochlorsilan verwendet. Vorzugsweise ist x = 0,85-0,95 (y = 0,15-0,05); dies ist dann der Fall, wenn man mindestens 3,5 Mol $NH_3$ pro Mol Aminochlorsilan verwendet. Im allgemeinen verwendet man höchstens 8 Mol, vorzugsweise höchstens 6 Mol $NH_3$ pro Mol Aminochlorsilan. Natürlich führt auch eine größere relative Menge $NH_3$ als 8 Mol zum Erfolg, aber dieser höhere Aufwand ist überflüssig.

In der obigen Formel der Polysilazane gemäß B) ist R, R* = $C_1$-$C_4$-Alkyl, Vinyl oder Phenyl und R′ = $C_1$-$C_4$-Alkyl, vorzugsweise R, R* = Methyl, Ethyl, Vinyl oder Phenyl und R′ = Methyl; besonders bevorzugt ist R, R* = Ethyl und R′ = Methyl.

Soweit die Herstellung der beim erfindungsgemäßen Verfahren eingesetzten Polysilazane.

Als Sinterhilfsmittel bei der erfindungsgemäßen Herstellung des sinterfähigen Keramikpulvers verwendet man im allgemeinen ein oder mehrere der folgenden Stoffe:
Erdalkalielemente, Al, Y, Seltene Erdenelemente, Ti, Zr, Hf, Nb, Ta, Cr, und zwar in Form ihrer Oxide, Alkoholate, Nitrate, Acetate, Acetylacetonate, Carbonate, Oxalate oder Halogenide. Bevorzugt unter den genannten Stoffen sind die Oxide von Mg, Al, Y, Dy, Ho, Er, Tm, Yb, Ti, Zr, Hf.

Besonders bevorzugt sind die Oxide von Mg, Al, Y, YB, Ti.

Die Menge an Sinterhilfsmittel beträgt vorzugsweise 0.02 bis 0.2 mol pro 100 g Polysilazan.

Das Polysilazan wird zunächst geschmolzen oder in einem organischen Lösungsmittel gelöst. Vorzugsweise verwendet man Tetrahydrofuran (THF), Toluol oder Hexan. In dieser Schmelze oder Lösung wird das pulverförmige Sinterhilfsmittel suspendiert. Zur besseren Dispergierung der Feststoffteilchen kann eine Ultraschallbehandlung der Suspension nachgeschaltet werden. Durch langsames Abkühlen der Schmelze oder langsames Eindampfen des Lösungsmittels bei Normaldruck oder Unterdruck erfolgt die homogene Abscheidung des Polymers auf die Feststoffteilchen. Die so erhaltene Substanz wird anschließend in Schutzgasatmosphäre bei 500-1600 °C, vorzugsweise 800-1200 °C pyrolysiert. Als Schutzgas wird dabei vorzugsweise $N_2$, Ar, $NH_3$ oder $H_2$ oder ein Gemisch dieser Gase eingesetzt, insbesondere $N_2$, Ar oder $NH_3$ oder deren Gemische.

Aus dem so erhaltenen Keramikpulver kann man $Si_3N_4$- oder $Si_3N_4$-SiC-Sinterkörper herstellen, indem man das Pulver in einem aprotischen Lösungsmittel mahlt, gegebenenfalls siebt, einen Formkörper daraus formt und diesen sintert.

Ein weiterer Gegenstand der Erfindung ist daher ein Verfahren zur Herstellung einer Siliziumnitridkeramik, dadurch gekennzeichnet, daß man ein Polysilazan schmilzt oder in einem organischen Lösungsmittel löst, in dieser Schmelze oder Lösung ein pulverförmiges Sinterhilfsmittel suspendiert, dann die erstarrte Schmelze oder den nach Verdampfung des Lösungsmittels erhaltenen Rückstand in Schutzgasatmosphäre bei 500 bis 1600 °C pyrolysiert, in einem aprotischen Lösungsmittel mahlt , aus dem gemahlenen Produkt einen Formkörper formt und diesen bei 1700 - 2000 °C in $N_2$-Atmosphäre bei 1 bis 150 bar sintert, wobei das Polysilazan entweder

A) dadurch erhältlich ist, daß man mindestens eines der Oligosilazane der Formel (I)

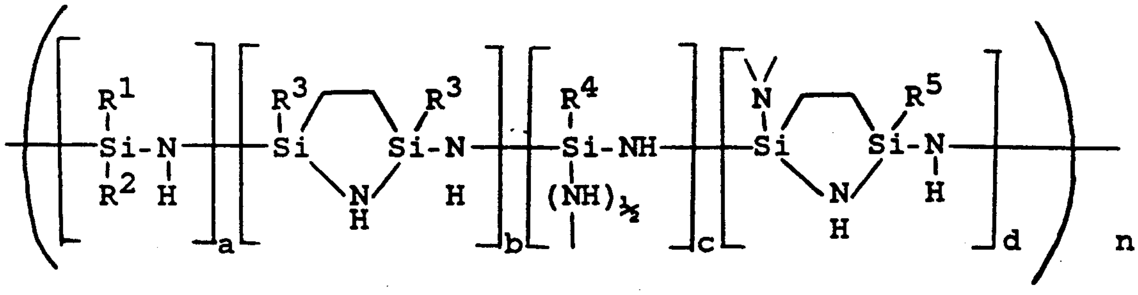

worin a, b, c, d die Molfraktionen der jeweiligen Struktureinheiten bedeuten und wobei 0≦a≦1, 0≦b≦1, 0≦c<0.7, 0≦d<0.7, 0.3≦a+b, c+d<0.7 und n etwa 2 bis etwa 12 ist, mit mindestens einem der Chlorsilane $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ bei 30 bis 300°C umsetzt, wobei unabhängig voneinander $R^1$, $R^2$, $R^4$, $R^6$, $R^7$, $R^8$ = H, $C_1$-$C_6$-Alkyl oder $C_2$-$C_6$-Alkenyl und $R^3$, $R^5$, $R^9$, $R^{10}$ = $C_1$-$C_6$-Alkyl oder $C_2$-$C_6$-Alkenyl ist, oder

B) folgende Formel hat

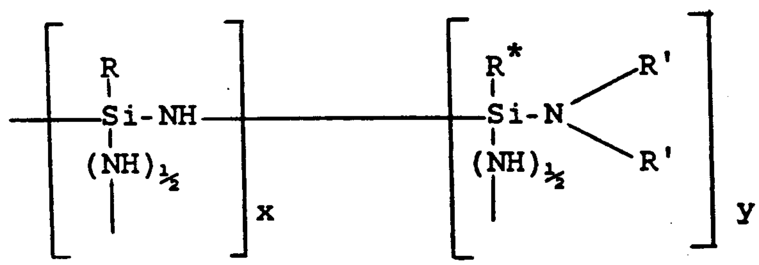

worin R und R* gleich oder verschieden sein können und R, R* = $C_1$-$C_4$-Alkyl, Vinyl oder Phenyl und R′ = $C_1$-$C_4$-Alkyl ist und x, y die Molfraktionen der beiden Struktureinheiten bedeuten, wobei x + y = 1 und x = 0,7-0,95 ist.

Man kann aber auch einen $Si_3N_4$- oder $Si_3N_4$-SiC-Sinterkörper dadurch herstellen, daß man zunächst vorgeht wie bei der erfindungsgemäßen Herstellung des Keramikpulvers, aber den nach Verdampfen des Lösungsmittels erhaltenen Rückstand noch nicht pyrolysiert, sondern zunächst daraus einen Formkörper formt und dann diesen pyrolysiert und sintert.

Ein weiterer Gegenstand der Erfindung ist daher ein Verfahren zur Herstellung einer Siliziumnitridkeramik, dadurch gekennzeichnet, daß man ein Polysilazan in einem organischen Lösungsmittel löst, in dieser Lösung ein pulverförmiges Sinterhilfsmittel suspendiert, dann das Lösungsmittel verdampft, aus dem erhaltenen Produkt einen Formkörper formt, diesen in Schutzgasatmosphäre bei 500 bis 1600°C pyrolysiert und dann bei 1750 bis 2000°C in $N_2$-Atmosphäre bei 1 bis 150 bar sintert, wobei das Polysilazan entweder

A) dadurch erhältlich ist, daß man mindestens eines der Oligosilazane der Formel (I)

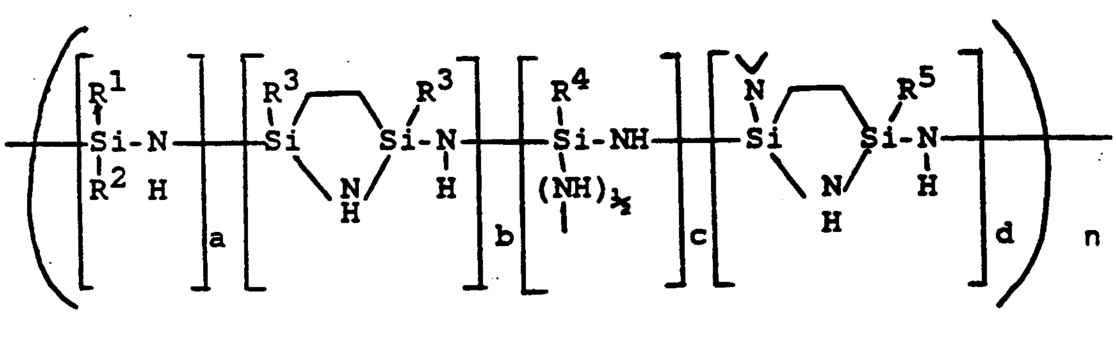

worin a, b, c, d die Molfraktionen der jeweiligen Struktureinheiten bedeuten und wobei 0≦a≦1, 0≦b≦1,

$0 \leq c < 0.7$, $0 \leq d < 0.7$, $0.3 \leq a + b$, $c + d < 0.7$ und n etwa 2 bis etwa 12 ist, mit mindestens einem der Chlorsilane $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ bei 30 bis 300 °C umsetzt, wobei unabhängig voneinander $R^1$, $R^2$, $R^4$, $R^6$, $R^7$, $R^8$ = H, $C_1$-$C_6$Alkyl oder $C_2$-$C_6$-Alkenyl und $R^3$, $R^5$, $R^9$, $R^{10}$ = $C_1$-$C_6$-Alkyl oder $C_2$-$C_6$-Alkenyl ist, oder

B) folgende Formel hat

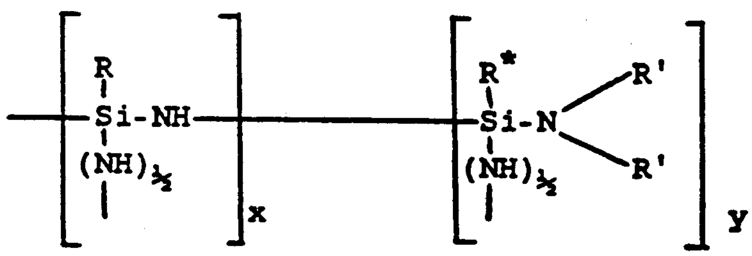

worin R und R* gleich oder verschieden sein können und R, R* = $C_1$-$C_4$-Alkyl, Vinyl oder Phenyl und R′ = $C_1$-$C_4$-Alkyl ist und x, y die Molfraktionen der beiden Struktureinheiten bedeuten, wobei x + y = 1 und x = 0,7-0,95 ist.

Bei beiden Arten der Herstellung einer Siliziumnitridkeramik wird die Sinterung vorzugsweise bei 1750-1850 °C in $N_2$-Atmosphäre bei 1-10 bar durchgeführt.

Der maximal zu erwartende SiC-Gehalt des Pyrolysats aufgrund der elementaren Zusammensetzung des Polysilazans liegt bei 22 Gew.-%, wenn der gesamte N-Gehalt zu $Si_3N_4$ reagiert. Bei der Pyrolyse unter Ar oder $N_2$ bis 1000 °C entsteht jedoch zusätzlich elementarer Kohlenstoff. Dieser reagiert bei den höheren Temperaturen, die insbesondere beim anschließenden Sintern angewandt werden, mit einem Teil des zunächst entstandenen $Si_3N_4$ unter Bildung von SiC und $N_2$. Aus diesem Grund haben die Sinterkörper, die mittels Pyrolyse unter Ar oder $N_2$ hergestellt werden, SiC-Gehalte von mehr als 22 Gew.-%, maximal 43 Gew.-%. Dagegen wird bei der Pyrolyse des Polysilazans unter $NH_3$-Atmosphäre reines $Si_3N_4$ gebildet. Auf diese Weise lassen sich je nach Wahl der Pyrolyseatmosphäre ($NH_3$, $N_2$, $H_2$, Ar oder deren Gemische) SiC-Gehalte zwischen 0 und 43 Gew.-% in den $Si_3N_4$/SiC-Sinterkörpern einstellen.

Das Gefüge des $Si_3N_4$/SiC-Verbundkörpers ist dadurch charakterisiert, daß aufgrund der dispergierten SiC-Teilchen das Kornwachstum der $Si_3N_4$-Matrix stark gehemmt ist. Die $Si_3N_4$-Körner weisen eine elongierte Kornform mit Korndurchmessern kleiner 1 $\mu$m und einem Verhältnis Kornlänge:Korndurchmesser = 5:1 bis 10:1 auf. Der mittlere Korndurchmesser der ungefähr äquiachsialen SiC-Körner ist kleiner 0.8 $\mu$m.

Das erfindungsgemäß hergestellte sinterfähige Keramikpulver enthält 40-55 Gew.-% Si, 0.05-25 Gew.-% C, 10-35 Gew.-% N, 5-15 Gew.-% 0 und 2-10 Gew.-% eines oder mehrerer der Elemente Mg, Al, Y, Dy, Ho, Er, Tm, Yb, Ti, Zr, Hf, wobei sämtliche genannten Elemente in den Pulverteilchen homogen verteilt sind und vor allem Si, C und N als amorphes Material gebunden sind. Die bevorzugten unter den neben Si, C, N und O vorhandenen Elementen sind Mg, Al, Y, Dy, Ho, Er, Tm, Yb, Ti, Zr, Hf. Insbesondere Mg, Al, Y, Yb, Ti sind geeignet, vor allem in einem Gehalt von 2-10 Gew.-% im sinterfähigen Keramikpulver.

Bevorzugt ist weiter ein Gehalt von 5 bis 25 Gew.-% C, der sich, wie oben erwähnt, über die Zusammensetzung des Schutzgases bei der Pyrolyse einstellen läßt.

Die erfindungsgemäß hergestellte Siliziumnitridkeramik ist sehr dicht, mit einer maximalen Porosität von 3 %. Vorzugsweise besteht sie aus 10-60 Gew.-% kristallinem SiC, 35-85 Gew.-% kristallinem $Si_3N_4$ und 3-20 Gew.-% amorpher oder teilweise kristalliner Zwischenkornphase, welche die Sinteradditive und Sauerstoff enthält. Die Zusammensetzung läßt sich wieder über die Zusammensetzung des Schutzgases bei der Pyrolyse steuern.

Die erfindungsgemäße Siliziumnitridkeramik kann zur Herstellung von Bauteilen für starke mechanische, thermische und korrosive Beanspruchung verwandt werden.

**Beispiel 1**

**a) Herstellung eines sinterfähigen Keramikpulvers**

In einem Einhalskolben mit Hahn wurden unter Argon 100 g des Polychlorsilazans der Formel

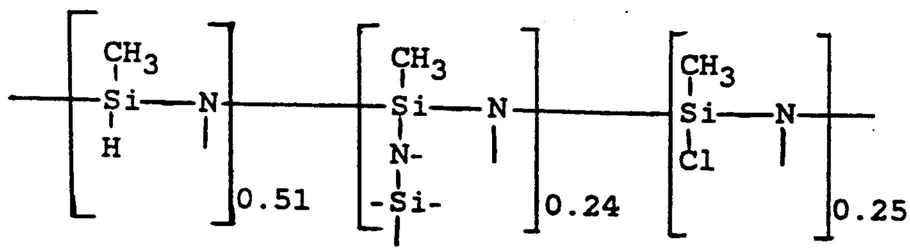

bei 150 ° C geschmolzen. Dieses Polysilazan war aus dem Oligosilazan

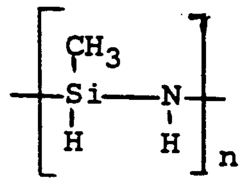

(Formel I mit a=1, b=c=d= 0, $R^1$= $CH_3$, $R^2$= H) und dem Chlorsilan $(CH_3)HSiCl_2$ im molaren Verhältnis 1:0.7 hergestellt worden.

In der Schmelze wurden 8.9 g $Al_2O_3$ und 4.0 g $Y_2O_3$ suspendiert. Nach anschließender Ultraschallbehandlung wurde das Material 10 h mit $NH_3$ bei 200 ° C behandelt. Nach dem Abkühlen wurde der Rückstand gemahlen und dann in einem Quarzrohr mit Hahn unter fließendem Argon pyrolysiert. Die Aufheizrate betrug bis 550 ° C 4K/min. Da bei dieser Temperatur Zersetzung eintritt, wurde eine Haltezeit von 120 min eingelegt. Zur Vervollständigung der Pyrolyse wurde das Pyrolysat mit einer Aufheizrate von 4 K/min auf 1000 ° C erhitzt und dort 60 min gehalten. Man erhielt einen röntgenamorphen Rückstand, bestehend aus 84 Gew.-% Pyrolysat, 11 Gew.-% $Al_2O_3$ und 5 Gew.-% $Y_2O_3$ mit folgender elementaranalytischer Zusammensetzung (in Gew.-%):

Si 50.6%, C 11.1%, N 19.8%, O 8.5%, Al 5.9%, Y 4.1%

Das erhaltene Pyrolysat wurde 3 h in n-Hexan attritiert. Dadurch wurden die während der Pyrolyse gebildeten Agglomerate zerstört. Das attritierte Pyrolysat besaß eine mittlere Teilchengröße von 0.7 µm und wies eine BET-Oberfläche von 20 $m^2$/g auf.

**b) Herstellung einer Mischkeramik**

Das soeben hergestellte s interfähige Keramikpulver wurde gesiebt (Maschenweite d= 160 µm), kalt-isostatisch mit 640 MPa gepreßt und gesintert. Das Sintern des Preßlings (Durchmesser = 10 mm, Höhe = 12 mm) erfolgte drucklos unter stehendem Stickstoff mit einer Aufheizrate von 20 K/min bis 1750 ° C und einer Haltezeit von 60 min. Die Sinterdichte betrug 3.23 g/$cm^3$, entsprechend 97 % der Theorie, bei der Annahme einer theoretischen Dichte von 3.33 g/$cm^3$. Durch elementaranalytische Bestimmung des C-Gehaltes wurde ein SiC-Anteil von 24 Gew.-% im gesinterten $Si_3N_4$/SiC-Körper ermittelt. Das Gefüge des Verbundkörpers wies mittlere Korngrößen von 0.4 µm auf. Die maximalen Korngrößen lagen bei ca. 1 µm.

**Beispiel 2**

**Herstellung eines sinterfähigen Keramikpulvers und anschließende Herstellung einer Mischkeramik.**

Es wurde das in Beispiel 1 genannte Polychlorsilazan eingesetzt, jedoch wurde nicht in der Schmelze, sondern in Lösung gearbeitet.

100 g des Polychlorsilazans wurden in 300 ml THF gelöst. In dieser Lösung wurden 8.9 g $Al_2O_3$ und 4.0 g $Y_2O_3$ suspendiert. Nach anschließender Ultraschallbehandlung wurde unter kräftigem Rühren das THF

bei 20 °C und $10^{-2}$ mbar abdestilliert. Es blieb ein pulvriger Rückstand. Der Rückstand wurde nun in gleicher Weise wie in Beispiel 1 weiterbehandelt. Dabei ergaben sich in engen Grenzen die gleichen Ergebnisse wie in Beispiel 1.

**Beispiel 3**

**a) Herstellung eines sinterfähigen Keramikpulvers**

In einem Einhalskolben mit Hahn wurden unter Schutzgas 100 g des in Beispiel 1 genannten Polychlorsilazans bei 150 °C geschmolzen. In dieser Schmelze wurden 8.9 g $Al_2O_3$ und 4.0 g $Y_2O_3$ suspendiert. Nach anschließender Ultraschallbehandlung wurde abgekühlt und der glasig spröde Rückstand gemahlen. Das entstandene Pulver wurde in einem Quarzrohr mit Hahn unter fließendem $NH_3$ pyrolysiert.

Die Aufheizrate betrug 2K/min bis zur Endtemperatur 1000 °C, welche 60 min gehalten wurde. Man erhielt einen röntgenamorphen Rückstand, bestehend aus 80 Gew.-% Pyrolysat, 14 Gew.-% $Al_2O_3$ und 6 Gew.-% $Y_2O_3$ mit folgender elementaranalytischer Zusammensetzung (in Gew.-%):

Si 46.2%, C 0.9%, N 30.8%, O 10.1%, Al 7.3%, Y 4.5%

Das erhaltene Pyrolysat wurde 3 h in n-Hexan attritiert. Dadurch wurden die während der Pyrolyse gebildeten Agglomerate zerstört. Das attritierte Pyrolysat besaß eine mittlere Teilchengröße von 0.6 µm und wies eine BET-Oberfläche von 20 $m^2$/g auf.

**b) Herstellung einer Siliziumnitridkeramik**

Die Verfahrensweise war analog Beispiel 1. Die Keramik besaß die folgenden Meßwerte:

Sinterdichte: 3.29 g/$cm^3$, entsprechend 98 % der Theorie (theoretische Dichte: 3.35 g/$cm^3$)

$Si_3N_4$-Anteil: 77 %

Mittlere Korngröße: 0.3 µm

**Beispiel 4**

**a) Herstellung eines sinterfähigen Keramikpulvers**

In einem Einhalskolben mit Hahn wurden unter Schutzgas 100 g eines Polysilazans der Formel

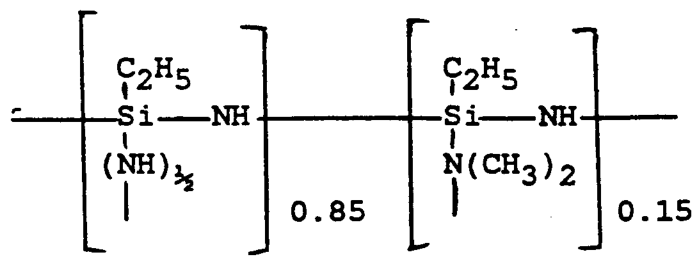

welches aus $C_2H_5SiCl_3$ + $2HN(CH_3)_2$ + 3.5 $NH_3$ hergestellt worden war, bei 80 °C geschmolzen. In dieser Schmelze wurden 8 g $Al_2O_3$ und 4 g $Y_2O_3$ suspendiert, zusätzlich wurde die Suspension 30 min mit Ultraschall bestrahlt. Anschließend wurde die Temperatur auf 180 °C erhöht, wobei nach ca. 3 h das Polysilazan ausgehärtet war. Man ließ abkühlen, und das spröde, glasartige Material wurde gemahlen. In einem gasdichten Aluminiumoxidrohr wurde unter fließendem Argon pyrolysiert. Die Aufheizrate betrug 2 K/min bis zur Endtemperatur von 1200 °C. Man erhielt einen röntgenamorphen Rückstand, bestehend aus 85 Gew.-% Pyrolysat, 10 Gew.-% $Al_2O_3$ und 5 Gew.-% $Y_2O_3$ mit folgender elementaranalytischer Zusammensetzung (in Gew.-%):

Si 46.6%, C 18.5%, N 19.1%, O 6.5%, Al 5.1%, Y 4.2%

Das erhaltene Pyrolysat wurde 3 h in n-Hexan attritiert. Dadurch wurden die während der Pyrolyse gebildeten Agglomerate zerstört. Das attritierte Pyrolysat besaß eine mittlere Teilchengröße von 0.7 µm und wies eine BET-Oberfläche von 18 $m^2$/g auf.

**b) Herstellung einer Siliziumnitrid enthaltenden Keramik**

Die Verfahrensweise war analog Beispiel 1. Die Keramik besaß die folgenden Meßwerte:

Sinterdichte: 3.25 g/$cm^3$, entsprechend 98 % der Theorie (theoretische Dichte: 3.30 g/$cm^3$)

$Si_3N_4$-Anteil: 48 %

Mittlere Korngröße: 0.5 µm

**Beispiel 5**

In diesem Beispiel wurde das in Beispiel 4 genannte Polysilazan eingesetzt, es wurde jedoch in Lösung statt in der Schmelze gearbeitet.
Dazu löste man 100 g des Polysilazans in 300 ml THF, suspendierte die Sinterhilfsmittel, destillierte das THF ab und ließ das Polysilazan bei 180 °C aushärten.

Die anschließende Verfahrensweise entsprach der in Beispiel 4 genannten. Die erhaltene Keramik besaß in engen Grenzen die gleichen Eigenschaften wie diejenige aus Beispiel 4.

**Beispiel 6**

**a) Herstellung eines sinterfähigen Keramikpulvers**

Es wurde wieder das in Beispiel 4 genannte Polysilazan benutzt. Der Ansatz entsprach Beispiel 4, nur wurde in $NH_3$ pyrolysiert (analog Beispiel 3). Die Aufheizrate betrug 2 K/min, und die Endtemperatur war 1100 °C. Der Anteil des Pyrolysats betrug 83 %, der des $Y_2O_3$ bzw. des $Al_2O_3$ wurde mit 6 bzw. 11 % bestimmt.
Elementaranalytische Zusammensetzung (in Gew.-%):
Si 48.7%, C 0.8%, N 32.5%, O 7.9%, Al 5.7%, Y 4.3%.

**b) Herstellung einer Siliziumnitridkeramik**

Die Verfahrensweise war analog Beispiel 1. Die Keramik besaß folgende Meßwerte:
Sinterdichte: 3.19 g/cm$^3$, entsprechend 97 % der Theorie (theoretische Dichte: 3.29 g/cm$^3$)
$Si_3N_4$-Anteil: 80 %
Mittlere Korngröße: 0.4 µm

**Beispiel 7**

Es wurde analog Beispiel 1 in der Schmelze gearbeitet, aber mit folgenden Substanzen:
100 g des Polysilazans

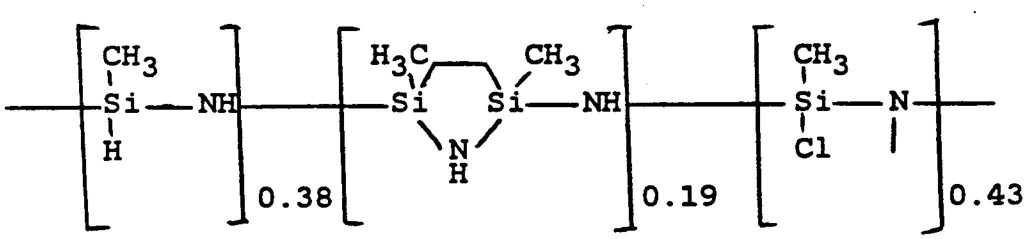

8 g $Al_2O_3$, 4 g $Y_2O_3$.
Das Polychlorsilazan war aus dem Oligosilazan

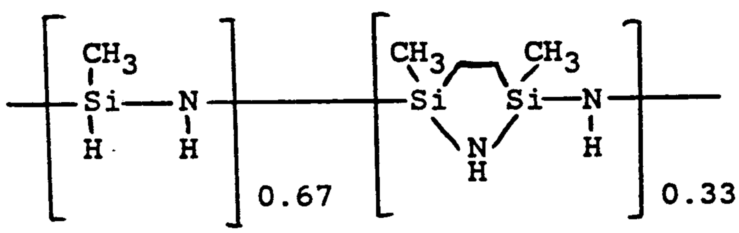

(Formel I mit a = 0.67, b = 0.33, c = d = 0, $R^1 = R^2 =$ $CH_3$, $R^2 =$ H) und dem Chlorsilan $CH_3SiCl_3$ im molaren Verhältnis 1:0.55 hergestellt worden.

Elementaranalytische Zusammensetzung (in Gew.-%):
Si 43.2%, C 21,1%, N 19.4%, O 7.3%, Al 5.8%, Y 3.5%.
Mittlere Teilchengröße: 0.7 µm, BET-Oberfläche: 17 m$^2$/g
Sinterdichte: 2.38 g/cm$^3$, entsprechend 96 % der theoretischen Dichte (2.48 g/cm$^3$)
SiC-Anteil: 20 %

Mittlere Korngröße: 0.5 µm

**Beispiel 8**

Es wurde analog Beispiel 2 in Lösung gearbeitet, aber mit den Substanzen wie in Beispiel 7.
Die Ergebnisse entsprachen in engen Grenzen den in Beispiel 7 genannten.

**Beispiel 9**

Es wurde analog Beispiel 3 gearbeitet (Pyrolyse in $NH_3$), aber mit den in Beispiel 7 genannten Substanzen.
Elementaranalytische Zusammensetzung (in Gew.-%):
Si 49.2%, C 1.0%, N 31.2%, O 8.2%, Al 5.8%, Y 3.5%
Mittlere Teilchengröße: 0.8 µm, BET-Oberfläche: 19 $m^2/g$
Sinterdichte: 3.23 $g/cm^3$, entsprechend 98 % der theoretischen Dichte (3.30 $g/cm^3$)
$Si_3N_4$-Anteil: 78 %
Mittlere Korngröße: 0.4 µm

**Beispiel 10**

Es wurde analog Beispiel 1 in der Schmelze gearbeitet, jedoch mit folgenden Substanzen:
100 g des Polychlorsilazans

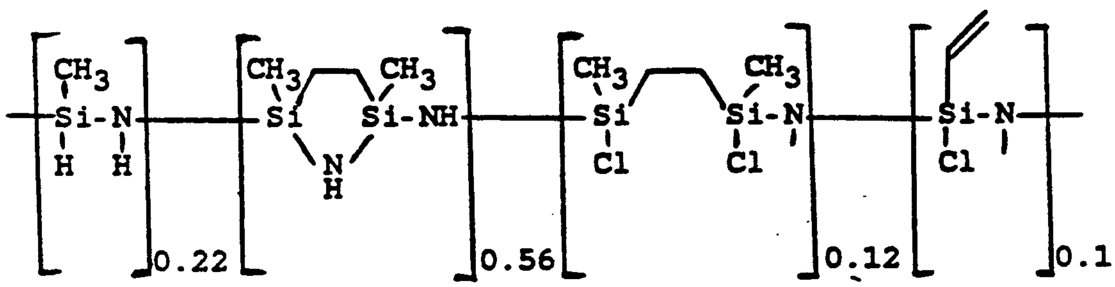

8 g $Al_2O_3$, 4 g $Y_2O_3$

Das Polychlorsilazan war aus dem Oligosilazan

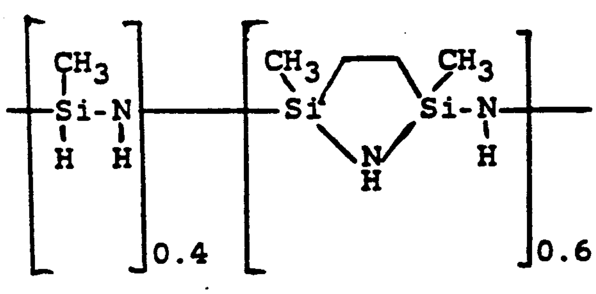

(Formel I mit a = 0.4, b = 0.6, c = d = 0, $R^1 = R^3 = CH_3$, $R^2 = H$) und den Chlorsilanen $Cl_2(CH_3)Si\text{-}CH_2CH_2\text{-}Si(CH_3)Cl_3$ + $C_2H_5SiCl_3$ im molaren Verhältnis 1:0.2:0.1 hergestellt worden.
Elementaranalytische Zusammensetzung (in Gew.-%):
Si 41.4 %, C 21.5%, N 17.9 %, O 8.9 %, Al 6.2%, Y 3.5%
Mittlere Teilchengröße: 0.9 µm, BET-Oberfläche: 16 $m^2/g$
Sinterdichte: 3.11 $g/cm^3$, entsprechend 97 % der theoretischen Dichte (3.20 $g/cm^3$)
$Si_3N_4$-Anteil: 44 %, SiC-Anteil: 21 %
Mittlere Korngröße: 0.5 µm

**Beispiel 11**

Es wurde analog Beispiel 2 in Lösung gearbeitet, jedoch mit den in Beispiel 10 genannten Substanzen. Die Ergebnisse entsprachen in engen Grenzen den in Beispiel 10 genannten.

**Beispiel 12**

Es wurde analog Beispiel 3 gearbeitet (Pyrolyse in $NH_3$), jedoch mit den in Beispiel 10 genannten Substanzen.
Elementaranalytische Zusammensetzung (in Gew.-%):
Si 48.8%, C 1.7%, N 30.1%, O 8.4%, Al 6.7%, Y 4.1%
Mittlere Teilchengröße: 0.8 µm, BET-Oberfläche: 17 $m^2/g$
Sinterdichte: 3.28 $g/cm^3$ entsprechend 98 % der theoretischen Dichte (3.35 $g/cm^3$)
$Si_3N_4$-Anteil: 75 %, SiC-Anteil: 5,5 %
Mittlere Korngröße: 0.4 µm

**Beispiel 13**

Es wurde analog Beispiel 1 in der Schmelze gearbeitet, jedoch mit folgenden Substanzen:
100 g des Polysilazans

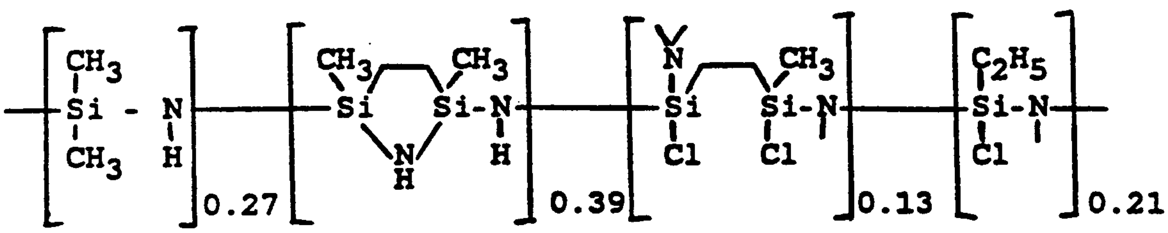

8 g $Al_2O_3$ , 4 g $Y_2O_3$.
Das Polychlorsilazan war hergestellt worden aus dem Oligosilazan

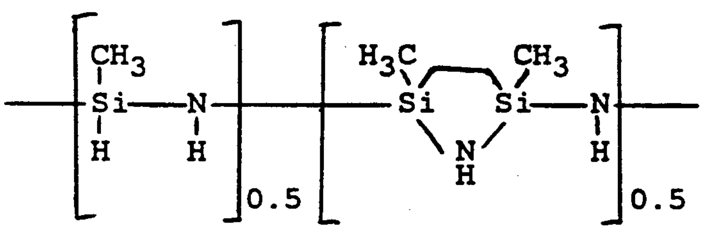

(Formel I mit a = 0.5, b = 0.5, c = d = 0, $R^1 = R^3 = CH_3$, $R^2 = H$) und den Chlorsilanen $Cl_3Si\text{-}CH_2CH_2\text{-}Si(CH_3)Cl_2 + C_2H_5SiCl_3$ im molaren Verhältnis 1:0.15:0.25.
Elementaranalytische Zusammensetzung (in Gew.-%):
Si 34.2%, C 21.2%, N 17.4%, O 10.2%, Al 7.8%, Y 5.1%.
Mittlere Teilchengröße: 0.9 µm, BET-Oberfläche: 16 $m^2/g$
Sinterdichte: 3.00 $g/cm^3$, entsprechend 96 % der theoretischen Dichte (3.13 $g/cm^3$)
$Si_3N_4$-Anteil: 43.5 %, SiC-Anteil: 11.6 %
Mittlere Korngröße: 0.5 µm

**Beispiel 14**

Es wurde analog Beispiel 2 gearbeitet, jedoch mit den in Beispiel 13 genannten Substanzen. Die Ergebnisse entsprachen in engen Grenzen den in Beispiel 13 genannten.

**Beispiel 15**

Es wird analog Beispiel 3 gearbeitet (Pyrolyse in $NH_3$), jedoch mit den in Beispiel 13 genannten Substanzen.
Elementaranalytische Zusammensetzung (in Gew.-%):
Si 47.1%, C 0.9%, N 33.0%, O 9.8%, Al 6.5%, Y 4.1%.
Mittlere Teilchengröße: 0.7 µm, BET-Oberfläche: 19 $m^2/g$
Sinterdichte: 3.25 $g/cm^3$, entsprechend 98 % der theoretischen Dichte (3.32 $g/cm^3$)
$Si_3N_4$-Anteil: 78.5 %
Mittlere Korngröße: 0.4 µm

**Beispiel 16**

Es wurde analog Beispiel 3 gearbeitet (Pyrolyse in $NH_3$), jedoch mit folgenden Substanzen:
50 g Polysilazan 1 der folgenden Formel (hergestellt wie in Beispiel 7):

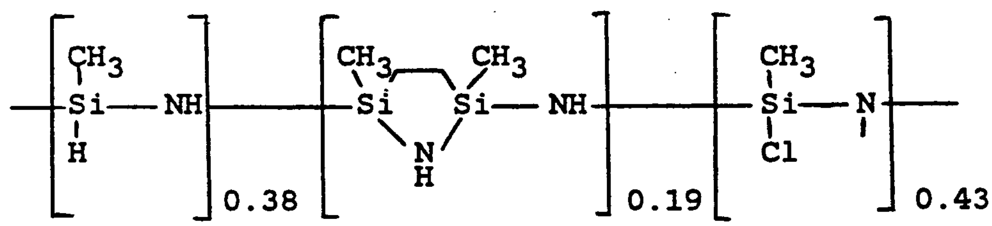

sowie 50 g Polysilazan 2 der folgenden Formel

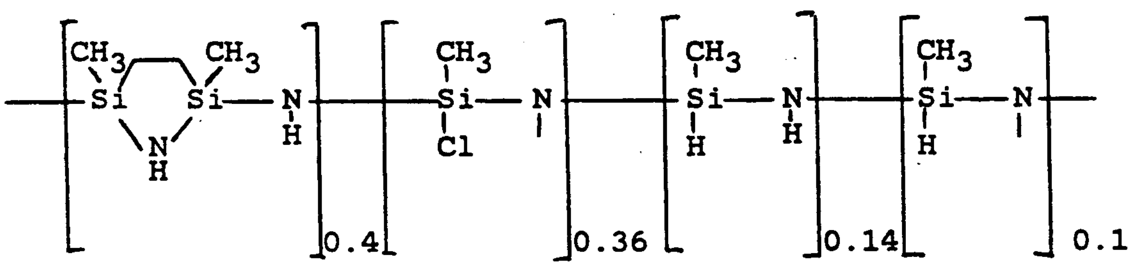

8 g $Al_2O_3$, 4 g $Y_2O_3$.
Das Polysilazan 2 war aus einer Mischung der Oligosilazane

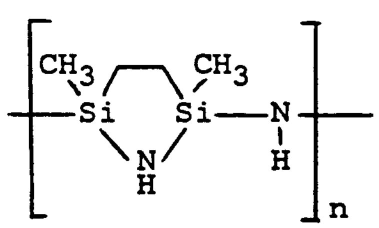

und

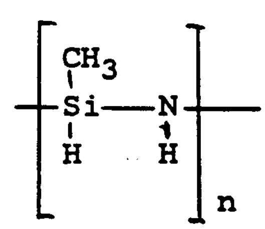

(Molverhältnis 2:1) und dem Chlorsilan $(CH_3)HSiCl_2$ im molaren Verhältnis 1:0.55 erhalten worden.
Elementaranalytische Zusammensetzung (in Gew.-%):
Si 46.4%, C 0.6%, N 30.8%, O 9.4%, Al 7.7%, Y 4.6%
Mittlere Teilchengröße: 0.6 µm, BET-Oberfläche: 19 $m^2/g$
Sinterdichte: 3.29 $g/cm^3$, entsprechend 98 % der theoretischen Dichte (3.36 $g/cm^3$)
$Si_3N_4$-Anteil: 77 %
Mittlere Korngröße: 0.4 µm

**Patentansprüche**

1. Verfahren zur Herstellung eines sinterfähigen Keramikpulvers, dadurch gekennzeichnet, daß man ein Polysilazan schmilzt oder in einem organischen Lösungsmittel löst, in dieser Schmelze oder Lösung ein pulverförmiges Sinterhilfsmittel suspendiert, dann die erstarrte Schmelze oder den nach Verdampfung des Lösungsmittels erhaltenen Rückstand in Schutzgasatmosphäre bei 500 bis 1600 °C pyrolysiert und dann in einem aprotischen Lösungsmittel mahlt, wobei das Polysilazan entweder

A) dadurch erhältlich ist, daß man mindestens eines der Oligosilazane der Formel (I)

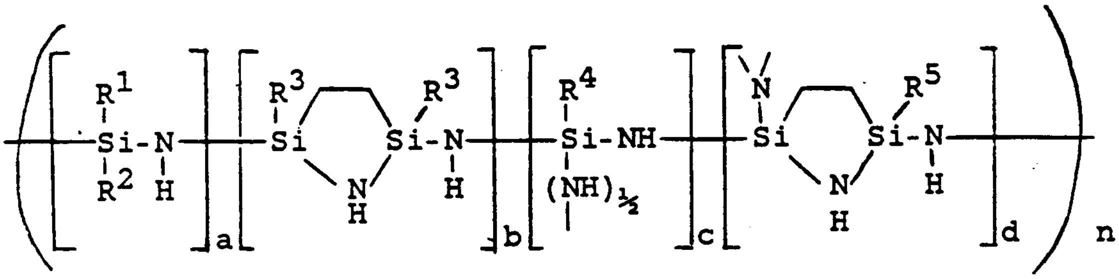

worin a, b, c, d die Molfraktionen der jeweiligen Struktureinheiten bedeuten und wobei $0 \leqq a \leqq 1$, $0 \leqq b \leqq 1$, $0 \leqq c < 0.7$, $0 \leqq d < 0.7$, $0.3 \leqq a + b$, $c + d < 0.7$ und n etwa 2 bis etwa 12 ist, mit mindestens einem der Chlorsilane $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ bei 30 bis 300 °C umsetzt, wobei unabhängig voneinander $R^1$, $R^2$, $R^4$, $R^6$, $R^7$, $R^8$ = H, $C_1$-$C_6$-Alkyl oder $C_2$-$C_6$-Alkenyl und $R^3$, $R^5$, $R^9$, $R^{10}$ = $C_1$-$C_6$-Alkyl oder $C_2$-$C_6$-Alkenyl ist, oder

B) folgende Formel hat

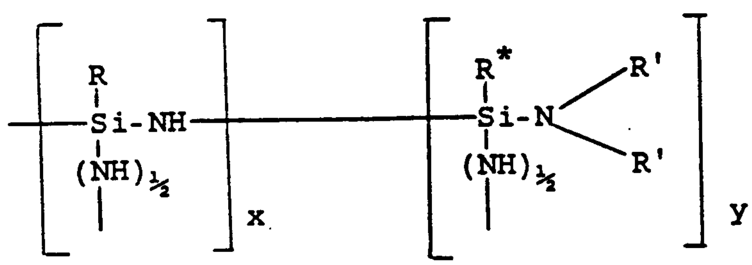

worin R und R* gleich oder verschieden sein können und R, R* = $C_1$-$C_4$-Alkyl, Vinyl oder Phenyl und R′ = $C_1$-$C_4$-Alkyl ist und x, y die Molfraktionen der beiden Struktureinheiten bedeuten, wobei x + y = 1 und x = 0,7-0,95 ist.

2. Verfahren zur Herstellung einer Siliziumnitridkeramik, dadurch gekennzeichnet, daß man ein Polysilazan schmilzt oder in einem organischen Lösungsmittel löst, in dieser Schmelze oder Lösung ein pulverförmiges Sinterhilfsmittel suspendiert, dann die erstarrte Schmelze oder den nach Verdampfung des Lösungsmittels erhaltenen Rückstand in Schutzgasatmosphäre bei 500 bis 1600 °C pyrolysiert, in einem aprotischen Lösungsmittel mahlt, aus dem gemahlenen Produkt einen Formkörper formt und diesen bei 1700 - 2000 °C in $N_2$-Atmosphäre bei 1 bis 150 bar sintert, wobei das Polysilazan entweder

A) dadurch erhältlich ist, daß man mindestens eines der Oligosilazane der Formel (I)

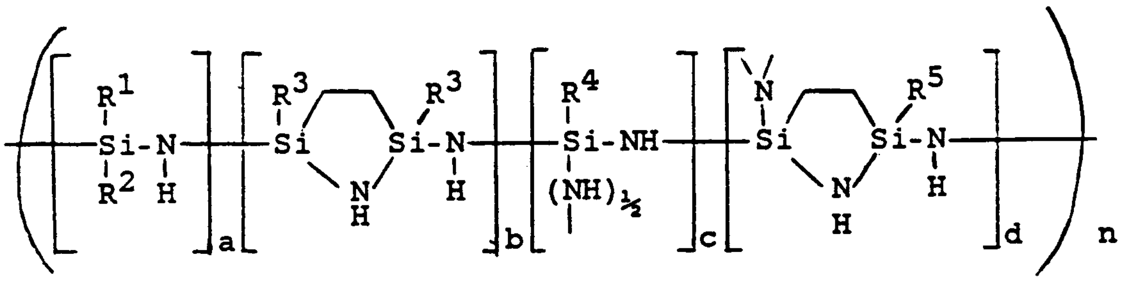

worin a, b, c, d die Molfraktionen der jeweiligen Struktureinheiten bedeuten und wobei $0 \leq a \leq 1$, $0 \leq b \leq 1$, $0 \leq c < 0.7$, $0 \leq d < 0.7$, $0.3 \leq a+b$, $c+d < 0.7$ und n etwa 2 bis etwa 12 ist, mit mindestens einem der Chlorsilane $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ bei 30 bis 300 °C umsetzt, wobei unabhängig voneinander $R^1$, $R^2$, $R^4$, $R^6$, $R^7$, $R^8$ = H, $C_1$-$C_6$-Alkyl oder $C_2$-$C_6$-Alkenyl und $R^3$, $R^5$, $R^9$, $R^{10}$ = $C_1$-$C_6$-Alkyl oder $C_2$-$C_6$-Alkenyl ist, oder

B) folgende Formel hat

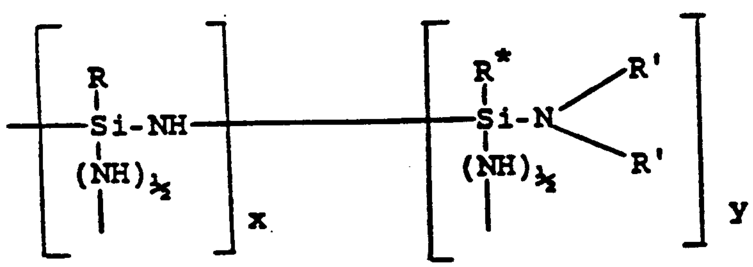

worin R und R* gleich oder verschieden sein können und R, R* = $C_1$-$C_4$-Alkyl, Vinyl oder Phenyl und R′ = $C_1$-$C_4$-Alkyl ist und x, y die Molfraktionen der beiden Struktureinheiten bedeuten, wobei x + y = 1 und x = 0,7-0,95 ist.

**3.** Verfahren zur Herstellung einer Siliziumnitridkeramik, dadurch gekennzeichnet, daß man ein Polysilazan in einem organischen Lösungsmittel löst, in dieser Lösung ein pulverförmiges Sinterhilfsmittel suspendiert, dann das Lösungsmittel verdampft, aus dem erhaltenen Produkt einen Formkörper formt, diesen in Schutzgasatmosphäre bei 500 bis 1600 °C pyrolysiert und dann bei 1750 bis 2000 °C in $N_2$-Atmosphäre bei 1 bis 150 bar sintert, wobei das Polysilazan entweder

A) dadurch erhältlich ist, daß man mindestens eines der Oligosilazane der Formel (I)

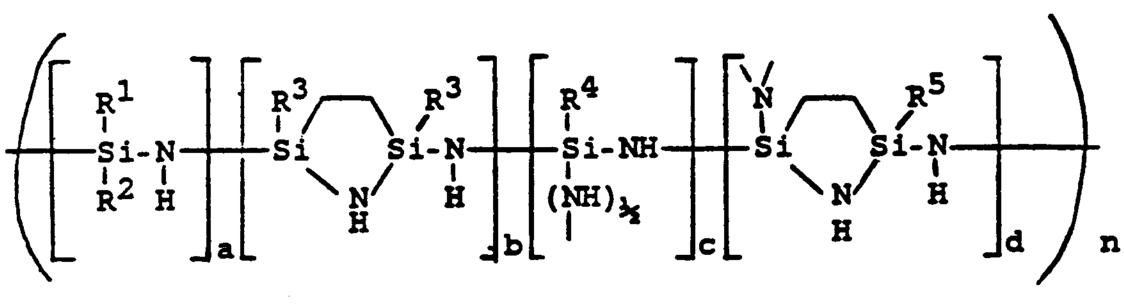

worin a, b, c, d die Molfraktionen der jeweiligen Struktureinheiten bedeuten und wobei $0 \leq a \leq 1$, $0 \leq b \leq 1$, $0 \leq c < 0.7$, $0 \leq d < 0.7$, $0.3 \leq a+b$, $c+d < 0.7$ und n etwa 2 bis etwa 12 ist, mit mindestens einem der Chlorsilane $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ bei 30 bis 300 °C umsetzt, wobei unabhängig voneinander $R^1$, $R^2$, $R^4$, $R^6$, $R^7$, $R^8$ = H, $C_1$-$C_6$-Alkyl oder $C_2$-$C_6$-Alkenyl und $R^3$, $R^5$, $R^9$, $R^{10}$ = $C_1$-$C_6$-Alkyl oder $C_2$-$C_6$-Alkenyl ist, oder

B) folgende Formel hat

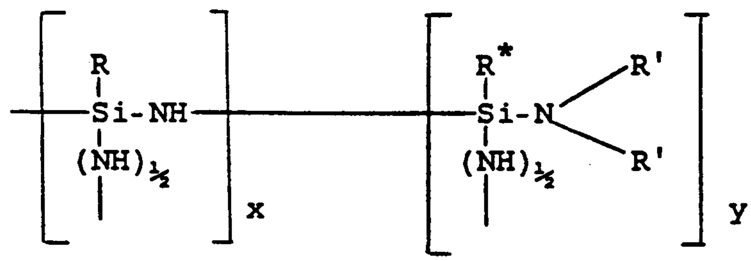

worin R und R* gleich oder verschieden sein können und R, R* = $C_1$-$C_4$-Alkyl, Vinyl oder Phenyl und R' = $C_1$-$C_4$-Alkyl ist und x, y die Molfraktionen der beiden Struktureinheiten bedeuten, wobei x + y = 1 und x = 0,7-0,95 ist.

**4.** Verfahren nach Anspruch 2 oder 3, dadurch gekennzeichnet, daß man bei 1750 bis 1850 °C in $N_2$-Atmosphäre bei 1 bis 10 bar sintert.

**5.** Verfahren nach einem der Ansprüche 1 bis 4, dadurch gekennzeichnet, daß man bei 800 bis 1200 °C pyrolysiert.

**6.** Verfahren nach einem der Ansprüche 1 bis 5, dadurch gekennzeichnet, daß man als Lösungsmittel für das Polysilazan Toluol, Hexan oder THF benutzt.

**7.** Verfahren nach einem der Ansprüche 1 bis 6, dadurch gekennzeichnet, daß man als Sinterhilfsmittel ein oder mehrere der Elemente Mg, Al, Y, Dy, Ho, Er, Tm, Yb, Ti, Zr, Hf in Form ihrer Oxide, Alkoholate, Nitrate, Acetate, Acetylacetonate, Carbonate, Oxalate oder Halogenide einsetzt.

**8.** Verfahren nach Anspruch 7, dadurch gekennzeichnet, daß man ein oder mehrere der Elemente Mg, Al, Y, Yb, Ti in Form ihrer Oxide einsetzt.

**9.** Verfahren nach Anspruch 7 oder 8, dadurch gekennzeichnet, daß man 0.02 bis 0.2 mol des Sinterhilfsmittels pro 100 g Polysilazan einsetzt.

**10.** Verfahren nach einem der Ansprüche 1 bis 9, dadurch gekennzeichnet, daß man als Schutzgas bei der Pyrolyse $N_2$, Ar, $NH_3$ oder ein Gemisch dieser Gase einsetzt.

## Claims

**1.** A process for the production of a sinterable ceramic powder, which comprises melting a polysilazane or dissolving it in an organic solvent, suspending a powdered sinter aid in this melt or solution, then pyrolyzing the solidified melt, or the residue obtained after evaporation of the solvent, at 500 to 1600 °C in a protective gas atmosphere and then grinding in an aprotic solvent, the polysilazane either

A) being obtainable by reacting at least one of the oligosilazanes of the formula (I)

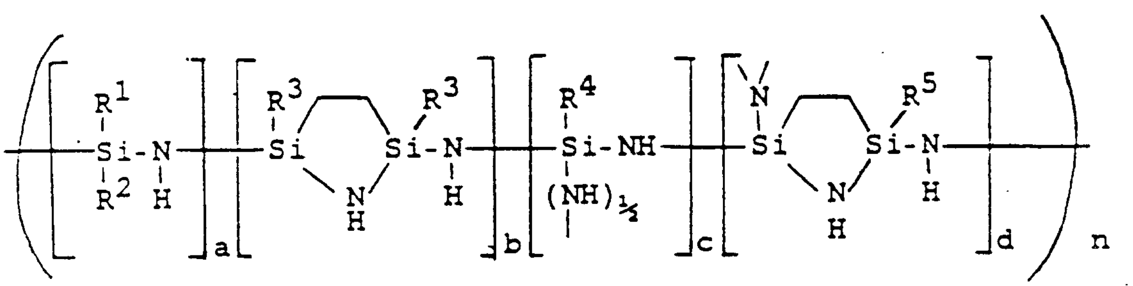

in which a, b, c and d are the mole fractions of the respective structural units and where 0≦a≦1,

$0 \leq b \leq 1$, $0 \leq c < 0.7$, $0 \leq d < 0.7$, $0.3 \leq a + b$, $c + d < 0.7$ and n is approximately 2 to approximately 12, with at least one of the chlorosilanes $R^6R^7SiCl_2$, $R^8SiCl_3$, $Cl_2R^9Si\text{-}CH_2CH_2\text{-}SiR^9Cl_2$ and $Cl_3Si\text{-}CH_2CH_2\text{-}SiR^{10}Cl_2$ at 30 to 300 °C, where, independently of one another, $R^1$, $R^2$, $R^4$, $R^6$, $R^7$ and $R^8$ are H, $C_1$-$C_6$-alkyl or $C_2$-$C_6$-alkenyl and $R^3$, $R^5$, $R^9$ and $R^{10}$ are $C_1$-$C_6$-alkyl or $C_2$-$C_6$-alkenyl,

or

B) having the following formula

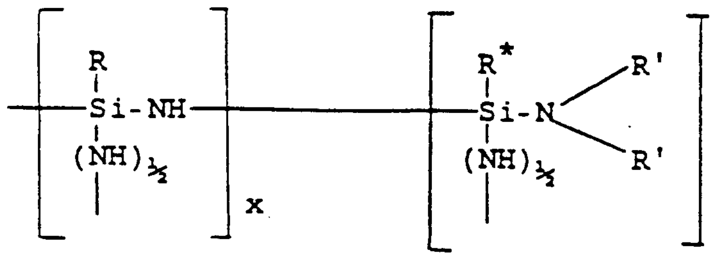

in which R and R* can be identical or different and R and R* are $C_1$-$C_4$-alkyl, vinyl or phenyl and R' is $C_1$-$C_4$-alkyl and x and y are the mole fractions of the two structural units, where $x + y = 1$ and $x = 0.7\text{-}0.95$.

2. A process for the production of a silicon nitride ceramic, which comprises melting a polysilazane or dissolving it in an organic solvent, suspending a powdered sinter aid in this melt or solution, then pyrolyzing the solidified melt, or the residue obtained after evaporation of the solvent, at 500 to 1600 °C in a protective gas atmosphere, grinding in an aprotic solvent, forming a molded article from the ground product and sintering this at 1700-2000 °C in an $N_2$ atmosphere at 1 to 150 bar, the polysilazane either

A) being obtainable by reacting at least one of the oligosilazanes of the formula (I)

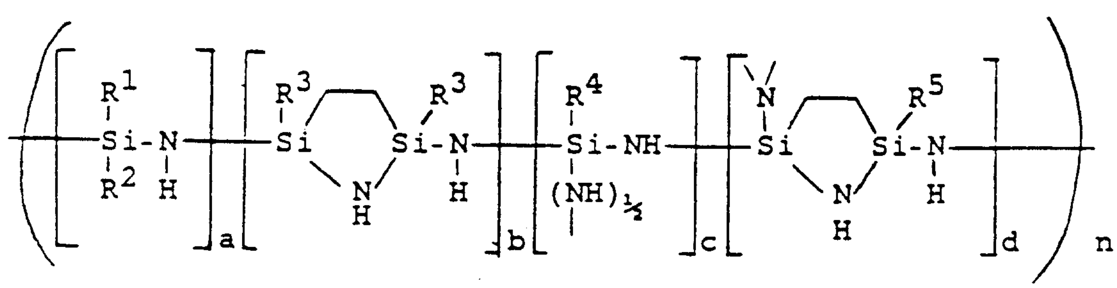

in which a, b, c and d are the mole fractions of the respective structural units and where $0 \leq a \leq 1$, $0 \leq b \leq 1$, $0 \leq c < 0.7$, $0 \leq d < 0.7$, $0.3 \leq a + b$, $c + d < 0.7$ and n is approximately 2 to approximately 12, with at least one of the chlorosilanes $R^6R^7SiCl_2$, $R^8SiCl_3$, $Cl_2R^9Si\text{-}CH_2CH_2\text{-}SiR^9Cl_2$ and $Cl_3Si\text{-}CH_2CH_2\text{-}SiR^{10}Cl_2$ at 30 to 300 °C, where, independently of one another, $R^1$, $R^2$, $R^4$, $R^6$, $R^7$ and $R^8$ are H, $C_1$-$C_6$-alkyl or $C_2$-$C_6$-alkenyl and $R^3$, $R^5$, $R^9$ and $R^{10}$ are $C_1$-$C_6$-alkyl or $C_2$-$C_6$-alkenyl,

or

B) having the following formula

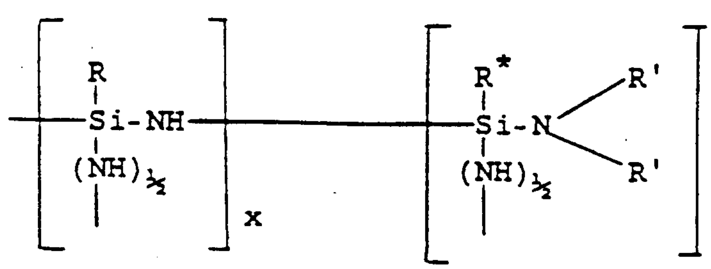

in which R and R* can be identical or different and R and R* are $C_1$-$C_4$-alkyl, vinyl or phenyl and R' is $C_1$-$C_4$-alkyl and x and y are the mole fractions of the two structural units, where x + y = 1 and x = 0.7-0.95.

3. A process for the production of a silicon nitride ceramic, which comprises dissolving a polysilazane in an organic solvent, suspending a powdered sinter aid in this solution, then evaporating the solvent, forming a molded article from the product obtained, pyrolyzing this at 500 to 1600°C in a protective gas atmosphere and then sintering it at 1750 to 2000°C in an $N_2$ atmosphere at 1 to 150 bar, the polysilazane either

A) being obtainable by reacting at least one of the oligosilazanes of the formula (I)

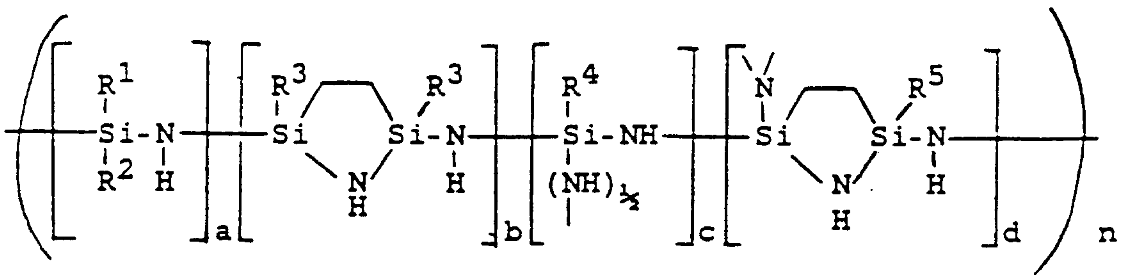

in which a, b, c and d are the mole fractions of the respective structural units and where $0 \leq a \leq 1$, $0 \leq b \leq 1$, $0 \leq c < 0.7$, $0 \leq d < 0.7$ $0.3 \leq a+b$, $c+d < 0.7$ and n is approximately 2 to approximately 12, with at least one of the chlorosilanes $R^6R^7SiCl_2$, $R^8SiCl_3$, $Cl_2R^9Si\text{-}CH_2CH_2\text{-}SiR^9Cl_2$ and $Cl_3Si\text{-}CH_2CH_2\text{-}SiR^{10}Cl_2$ at 30 to 300°C, where, independently of one another, $R^1$, $R^2$, $R^4$, $R^6$, $R^7$ and $R^8$ are H, $C_1$-$C_6$-alkyl or $C_2$-$C_6$-alkenyl and $R^3$, $R^5$, $R^9$ and $R^{10}$ are $C_1$-$C_6$-alkyl or $C_2$-$C_6$-alkenyl,

or

B) having the following formula

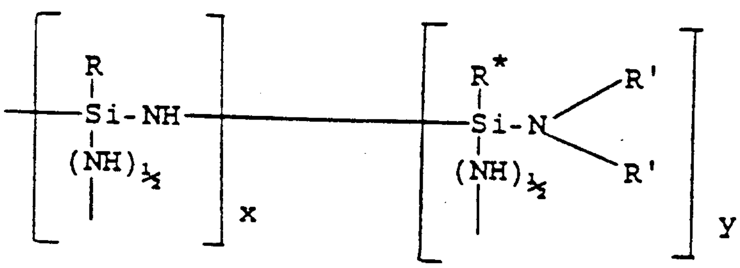

in which R and R* can be identical or different and R and R* are $C_1$-$C_4$-alkyl, vinyl or phenyl and R' is $C_1$-$C_4$-alkyl and x and y are the mole fractions of the two structural units, where x + y = 1 and x = 0.7-0.95.

4. The process as claimed in claim 2 or 3, wherein sintering is carried out at 1750 to 1850°C in an $N_2$ atmosphere at 1 to 10 bar.

5. The process as claimed in one of claims 1 to 4, wherein pyrolysis is carried out at 800 to 1200°C.

6. The process as claimed in one of claims 1 to 5, wherein toluene, hexane or THF is used as the solvent for the polysilazane.

7. The process as claimed in one of claims 1 to 6, wherein one or more of the elements Mg, Al, Y, Dy, Ho, Er, Tm, Yb, Ti, Zr and Hf are employed in the form of their oxides, alcoholates, nitrates, acetates, acetylacetonates, carbonates, oxalates or halides as sinter aids.

8. The process as claimed in claim 7, wherein one or more of the elements Mg, Al, Y, Yb and Ti are employed in the form of their oxides.

9. The process as claimed in claim 7 or 8, wherein 0.02 to 0.2 mol of the sinter aid is employed per 100 g of polysilazane.

10. The process as claimed in one of claims 1 to 9, wherein $N_2$, Ar, $NH_3$ or a mixture of these gases is employed as the protective gas in the pyrolysis.

**Revendications**

1. Procédé de préparation d'une poudre céramique frittable, procédé caractérisé en ce que l'on fond un polysilazane ou on le dissout dans un solvant organique, on met en suspension dans cette masse fondue ou dans cette solution un adjuvant de frittage pulvérulent, puis on pyrolyse entre 500 et 1600 °C, dans une atmosphère de gaz protecteur, la masse fondue solidifiée ou la matière qui reste après que l'on a éliminé le solvant par évaporation, et on la broie ensuite dans un solvant aprotique, le polysilazane soit

A) étant obtenu par réaction d'au moins un des oligosilazanes de formule (I)

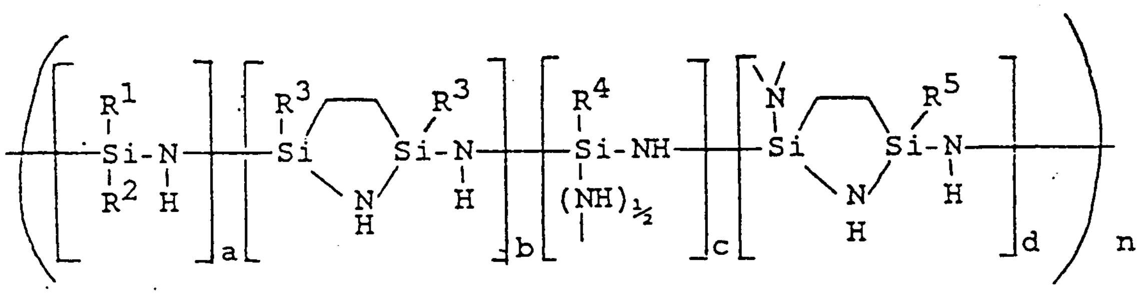

dans laquelle a, b, c, d désignent les fractions molaires des divers motifs structuraux et étant tels que $0 \leqq a \leqq 1$, $0 \leqq b \leqq 1$, $0 \leqq c < 0{,}7$, $0 \leqq d < 0{,}7$, $0{,}3 \leqq a + b$, $c + d < 0{,}7$, et n étant un nombre d'environ 2 à environ 12, avec au moins un des chlorosilanes $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$, à une température de 30 à 300 °C, $R^1$, $R^2$, $R^4$, $R^6$, $R^7$, $R^8$ désignant chacun, indépendamment les uns des autres, H, un alkyle en $C_1$-$C_6$ ou un alcényle en $C_2$-$C_6$ et $R^3$, $R^5$, $R^9$, $R^{10}$ un alkyle en $C_1$-$C_6$ ou un alcényle en $C_2$-$C_6$, soit

B) ayant la formule suivante

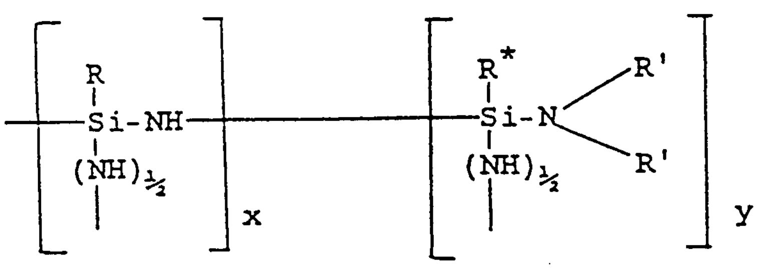

dans laquelle R et R* peuvent être identiques ou différents et R, R*, sont chacun un alkyle en $C_1$-$C_4$, un vinyle ou un phényle et R' est un alkyle en $C_1$-$C_4$ et x, y représentent les fractions molaires des deux motifs structuraux, x + y étant égale à 1 et x un nombre de 0,7 à 0,95.

2. Procédé de préparation d'une céramique en nitrure de silicium, procédé caractérisé en ce que l'on fond un polysilazane ou on le dissout dans un solvant organique, on met en suspension dans cette masse fondue ou dans cette solution un adjuvant de frittage pulvérulent puis on pyrolyse sous une atmosphère de gaz protecteur entre 500 et 1600 °C la masse fondue prise en masse ou la matière résultant de l'évaporation du solvant, on la broie dans un solvant aprotique, du produit broyé, on forme un objet

moulé que l'on fritte à 1 700-2000 °C en atmosphère d'azote sous une pression de 1 à 150 bars, le polysilazane soit

A) étant obtenu par réaction d'au moins un des oligosilazanes de formule (I)

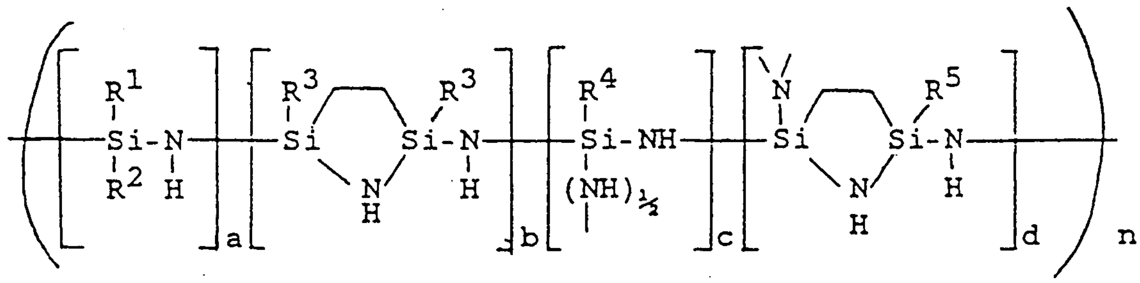

dans laquelle a, b, c et d désignent les fractions molaires des divers motifs structuraux et étant tels que $0 \leqq a \leqq 1$, $0 \leqq b \leqq 1$, $0 \leqq c < 0,7$, $0 \leqq d < 0,7$, $0,3 \leqq a + b$, $c + d < 0,7$, et n étant un nombre d'environ 2 à environ 12 avec au moins un des chlorosilanes $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$, à une température de 30 à 300 °C, $R^1$, $R^2$, $R^4$, $R^6$, $R^7$ et $R^8$ désignant chacun, indépendamment les uns des autres, H, un alkyle en $C_1$-$C_6$ ou un alcényle en $C_2$-$C_6$ et $R^3$, $R^5$, $R^9$ et $R^{10}$ un alkyle en $C_1$-$C_6$ ou un alcényle en $C_2$-$C_6$, soit

B) ayant la formule suivante

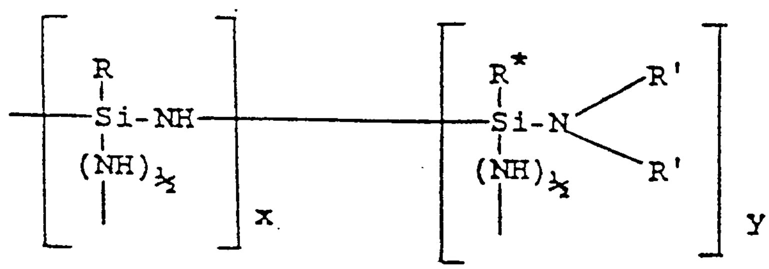

dans laquelle R et R* peuvent être identiques ou différents et R, R*, sont chacun un alkyle en $C_1$-$C_4$, un vinyle ou un phényle et R' est un alkyle en $C_1$-$C_4$ et x, y représentent les fractions molaires des deux motifs structuraux, la somme x + y étant égale à 1 et x un nombre de 0,7 à 0,95.

**3.** Procédé de préparation d'une céramique en nitrure de silicium, procédé caractérisé en ce que l'on dissout un polysilazane dans un solvant organique, on met un adjuvant de frittage pulvérulent en suspension dans cette solution puis on évapore le solvant, du produit obtenu, on forme un objet moulé que l'on pyrolyse en atmosphère de gaz protecteur entre 500 et 1600 °C puis que l'on fritte en atmosphère d'azote entre 1 750 et 2000 °C sous une pression de 1 à 150 bars, le polysilazane soit

A) étant obtenu par réaction d'au moins un des oligosilazanes de formule (I)

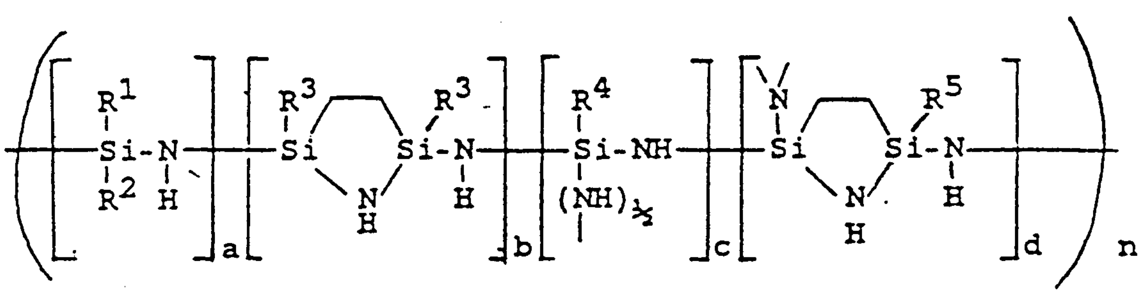

dans laquelle a, b, c, d désignant les fractions molaires des divers motifs structuraux et étant tels que $0 \leqq a \leqq 1$, $0 \leqq b \leqq 1$, $0 \leqq c < 0,7$, $0 \leqq d < 0,7$, $0,3 \leqq a + b$, $c + d < 0,7$, et n étant un nombre

d'environ 2 à environ 12 avec au moins un des chlorosilanes $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$, à une température de 30 à 300 °C, $R^1$, $R^2$, $R^4$, $R^6$, $R^7$ et $R^8$ désignant chacun, indépendamment les uns des autres, H, un alkyle en $C_1$-$C_6$ ou un alcényle en $C_2$-$C_6$ et $R^3$, $R^5$, $R^9$ et $R^{10}$ un alkyle en $C_1$-$C_6$ ou un alcényle en $C_2$-$C_6$, soit

B) ayant la formule suivante:

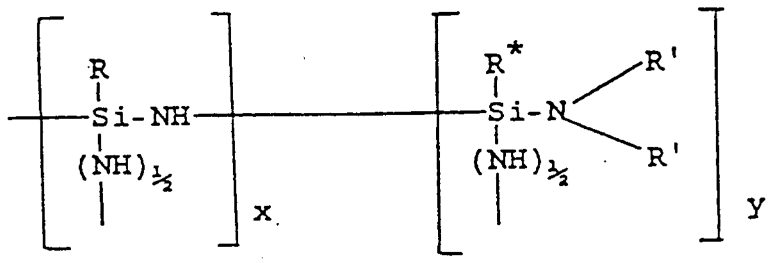

dans laquelle R et R* peuvent être identiques ou différents et R, R*, sont chacun un alkyle en $C_1$-$C_4$, un vinyle ou un phényle et R' est un alkyle en $C_1$-$C_4$ et x, y représentent les fractions molaires des deux motifs structuraux, la somme x + y étant égale à 1 et x un nombre de 0,7 à 0,95.

**4.** Procédé selon la revendication 2 ou 3, caractérisé en ce que l'on effectue le frittage à une température de 1750 à 1850 °C en atmosphère d'azote sous une pression de 1 à 10 bars.

**5.** Procédé selon l'une des revendications 1 à 4,caractérisé en ce que l'on effectue la pyrolyse entre 800 et 1200 °C.

**6.** Procédé selon l'une des revendications 1 à 5, caractérisé en ce que l'on utilise, comme solvant, du polysilazane, du toluène, de l'hexane ou du THF.

**7.** Procédé selon l'une des revendications 1 à 6, caractérisé en ce que l'on utilise comme adjuvant de frittage un ou plusieurs des éléments Mg, Al, Y, Dy, Ho, Er, Tm, Yb, Ti, Zr, Hf sous la forme de leurs oxydes, alcoolates, nitrates, acétates, acétylacétonates, carbonates, oxalates ou halogénures.

**8.** Procédé selon la revendication 7, caractérisé en ce que l'on utilise un ou plusieurs des éléments Mg, Al, Y, Yb, Ti sous la forme de leurs oxydes.

**9.** Procédé selon la revendication 7 ou 8, caractérisé en ce que l'on opère avec de 0,02 à 0,2 mole de l'adjuvant de frittage pour 100 g du polysilazane.

**10.** Procédé selon l'une des revendications 1 à 9, caractérisé en ce que l'on utilise comme gaz protecteur dans la pyrolyse, de l'azote, de l'argon, de l'ammoniac ou un mélange de ces gaz.